# EUROPÄISCHE PATENTANMELDUNG

(11) **EP 4 678 370 A1**
(43) Veröffentlichungstag der Anmeldung: **14.01.2026**
(21) Anmeldenummer: 24187579.8
(22) Anmeldetag: 10.07.2024
(51) Int. Cl.: B29C 45/27, B29C 45/73

(54) **VERTEILEREINHEIT FÜR EIN SPRITZGUSSWERKZEUG MIT INTEGRIERTER KÜHLUNG**

(71) Anmelder: Witosa GmbH, 35066 Frankenberg (DE)
(72) Erfinder: GLITTENBERG, Torsten, 35066 Frankenberg (DE); HALLENBERGER, Martin, 35088 Frohnhausen (DE)
(74) Vertreter: Walther Bayer Faber Patentanwälte PartGmbB

(57) **Zusammenfassung**

Gegenstand der Erfindung ist eine Verteilereinheit (1) für ein Spritzgusswerkzeug, aufweisend eine Vielzahl von Heißkanaldüsen (10), wobei die Verteilereinheit (1) wenigstens ein Heizelement (11) aufweist, das zur Beheizung der Verteilereinheit (1) dient, sodass die Fließfähigkeit einer Kunststoffschmelze aufrecht haltbar und an die Heißkanaldüsen (10) führbar ist. Erfindungsgemäß ist zwischen den Heißkanaldüsen (10) eine Kühleinrichtung (12) angeordnet, wobei die Kühleinrichtung (12) Mittel (13) aufweist, mit denen zumindest ein Werkzeugelement des formgebenden Spritzgusswerkzeugs kühlbar ist.

## Beschreibung

Die Erfindung betrifft eine Verteilereinheit für ein Spritzgusswerkzeug, aufweisend eine Vielzahl von Heißkanaldüsen, wobei wenigstens ein Heizelementeingerichtet ist, das zur Beheizung der Verteilereinheit dient, sodass die Fließfähigkeit einer Kunststoffschmelze aufrecht haltbar und an die Heißkanaldüsen führbar ist.

### STAND DER TECHNIK

Verteilereinheiten dienen zur Aufnahme von Heißkanaldüsen, und beinhalten Schmelzkanäle, über die die plastifizierte Kunststoffschmelze den Heißkanaldüsen zugeteilt wird. Eine Verteilereinheit ist in der Regel als Verteilerplatte oder in Form eines Verteilerblockes ausgestaltet. Um einen fließfähigen Zustand der Kunststoffschmelze aufrecht zu erhalten, muss die Verteilereinheit auf einer entsprechenden Temperatur gehalten werden, wobei zudem die Heißkanaldüsen einzeln beheizt sein können, durch die schließlich die plastifizierte Schmelze bis in das Spritzgusswerkzeug hinein gelangt. Auch ist bekannt, die Vielzahl von Heißkanaldüsen über Heizelemente in einem Grundkörper der Verteilereinheit zu beheizen.

Das Spritzgusswerkzeug selbst weist eine Kavität auf, von der das spätere Bauteil durch ein Einspritzen der plastifizierten Schmelze abgeformt werden kann. Derartige Spritzgusswerkzeuge sind in der Regel 2-teilig aufgebaut und können über eine Hubbewegung geöffnet werden, um das fertige Bauteil zu entformen. An einem der beiden formgebenden Spritzgusswerkzeuge befindet sich hinterseitig die Verteilereinheit mit der wenigstens einen oder der -wie hier vorgesehen- Vielzahl von Heißkanaldüsen, wobei eine Vielzahl von Heißkanaldüsen besonders dann Anwendung findet, wenn der Anguss für die Herstellung eines einzigen Bauteils mehrfach vorhanden sein soll. So können bei mehreren Heißkanaldüsen zwar mehrere einzelne Bauteile hergestellt werden, es kommt jedoch auch vor, dass ein einziges Bauteil über eine Vielzahl von Angüssen hergestellt werden muss. Derartige Bauteile sind beispielsweise Multi-Testplatten zur Analyse medizinischer Proben, beispielsweise PCR-Tests, und Multi-Testplatten für medizinische Zwecke können bis zu 100 Vertiefungen aufweisen, die mit einem jeweiligen Anguss versehen sind, insbesondere um die Ausprägung von Fließstrukturen in den Vertiefungen zu vermeiden, beispielsweise für eine hochwertige Analyse des eingegebenen Inhalts mittels optischer Verfahren.

Beispielsweise kann eine derartige Testplatte zwölf Reihen mit je acht Vertiefungen aufweisen, sodass eine einzige, einteilige und struktureinheitliche Testplatte 96 Vertiefungen aufweist. Eine entsprechende Verteilereinheit eines Spritzgusswerkzeuges weist folglich eine Anzahl von 96 Heißkanaldüsen auf, die in einer entsprechenden matrixähnlichen Anordnung, etwa einem Array eingerichtet sind. Folglich wird die Verteilereinheit mit einer entsprechenden Anzahl von Heißkanaldüsen und einer entsprechenden Anzahl von Schmelzkanälen eingerichtet, wobei aufgrund der begrenzten Abmessungen der Testplatte auch die Verteilereinheit auf sehr engem Raum die große Anzahl von Heißkanaldüsen aufweisen muss. Beim Einsatz einer solchen Verteilereinheit in einem Spritzgusswerkzeug ergibt sich dabei der Nachteil, dass die Verteilereinheit mit der großen Anzahl von Heißkanaldüsen eine größere Wärmemenge in den Teil des Spritzgusswerkzeuges einbringt, sodass es teilweise dazu führt, dass die in das Spritzgusswerkzeug beziehungsweise in die Kavität eingegebene plastifizierte Schmelze nicht mehr erkaltet und folglich auch nicht mehr erstarrt. Lange Zykluszeiten und eine niedrigere Ausbringung sind die Folgen, die zu vermeiden sind.

### OFFENBARUNG DER ERFINDUNG

Die Aufgabe der Erfindung ist die weitere Verbesserung einer Verteilereinheit für ein Spritzgusswerkzeug mit einer Vielzahl von Heißkanaldüsen, die über Heizelemente beheizt ist, jedoch ohne dass die Verteilereinheit in Kontakt mit dem Spritzgusswerkzeug dieses übermäßig aufheizt. Insbesondere soll eine Verteilereinheit mit einer großen Anzahl von Heißkanaldüsen geschaffen werden, die zur Herstellung eines einteiligen Bauteils mit einer entsprechend großen Anzahl von Angüssen in einem Spritzgusswerkzeug hergestellt werden kann, wobei dennoch kurze Zykluszeiten erreicht werden sollen.

Diese Aufgabe wird ausgehend von einer Verteilereinheit gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schlägt zur Lösung der vorstehenden Aufgabe die technische Lehre vor, dass zwischen den Heißkanaldüsen eine Kühleinrichtung in der Verteilereinheit angeordnet ist und wobei die Kühleinrichtung Mittel aufweist, mit denen zumindest ein Werkzeugelement des formgebenden Spritzgusswerkzeugs aus der Verteilereinheit heraus kühlbar ist.

Kerngedanke der Erfindung ist die Verlagerung einer ansonsten für ein Spritzgusswerkzeug bekannte Kühleinrichtung in die Verteilereinheit, und zwar so, dass die Kühleinrichtung räumlich zwischen den Heißkanaldüsen eingerichtet ist und Mittel aufweist, über die aus der Verteilereinheit heraus das Werkzeugelement des formgebenden Spritzgusswerkzeuges gekühlt werden kann. Mit anderen Worten sind in der Verteilereinheit gleichzeitig sowohl wenigstens ein Heizelement, vorzugsweise eine Vielzahl von Heizelementen, und wenigstens eine Kühleinrichtung eingerichtet, sodass die Verteilereinheit im Betrieb ein Temperaturprofil erhält, das sich abwechselnde Heißzonen und Kaltzonen aufweist. In den Heißzonen befinden sich dabei die Heißkanaldüsen, um eine Temperatur zu behalten, die die Schmelze im plastifizierten Zustand behält und dem Werkzeug zuführen kann, bis diese also in das Werkzeugelement des Spritzgusswerkzeuges eingegeben wurde. Zugleich sind jedoch auch Kaltzonen eingerichtet, die im Bereich der Mittel auftreten, die dazu eingerichtet sind, das Werkzeugelement des formgebenden Spritzgusswerkzeuges aus der Verteilereinheit heraus zu kühlen. Die Zonen hoher Temperatur und niedrigerer Temperatur können dabei insbesondere regelmäßig auftreten, und über der Kontaktfläche der Verteilereinheit zum Spritzgusswerkzeug matrixartig oder arrayartig verteilt sein.

Um einen fließfähigen Zustand der Kunststoffschmelze zu gewährleisten, muss die Verteilereinheit auf einer entsprechenden Temperatur gehalten werden, sodass wenigstens ein Heizelement einen Grundkörper der Verteilereinheit beheizen kann, wodurch auch die Heißkanaldüsen aufheizen oder die Heißkanaldüsen werden einzeln mit Heizelementen beheizt, durch die schließlich die Kunststoffschmelze bis in das Spritzgusswerkzeug hinein gelangt. Insofern kann erfindungsgemäß der Grundkörper der Verteilereinheit und/oder es können die Heißkanaldüsen die Heizelemente als Bestandteil der Verteilereinheit umfassen.

So ist es insbesondere denkbar, dass die Heißkanaldüsen in Reihen und Spalten angeordnet sind und/oder dass die Anordnung der Heißkanaldüsen ein Array bildet. Das zu erzeugende Bauteil kann beispielsweise eine rechteckige PCR-Platte betreffen, sodass die Heißkanaldüsen entsprechend der Anordnung der Vertiefungen in der PCR-Platte ebenfalls über einem rechteckigen Feld ausgebildet sind. So können die Heißkanaldüsen in Reihen und Spalten angeordnet sein, sodass folglich auch die Mittel zur Kühlung in Reihen und Spalten angeordnet sind, mit denen das Werkzeugelement des formgebenden Spritzgusswerkzeuges über einen entsprechenden Festkörperkontakt gekühlt werden kann. Beispielsweise können acht Reihen mit je zwölf Heißkanaldüsen ausgebildet sein, um die Verteilereinheit zu bilden. Dabei kann die Verteilereinheit selbst wiederum aus mehreren Verteilerblöcken gefertigt sein.

Insofern ist es vorteilhafterweise vorgesehen, dass ein Grundkörper der Verteilereinheit mittels wenigstens eines Verteilerblockes gebildet ist, an dem die Heißkanaldüsen aufgenommen sind, wobei die Kühleinrichtung wenigstens einen Kühlkanal aufweist, der im Verteilerblock eingebracht ist. Wird die Verteilereinheit gebildet, können mehrere Verteilerblöcke parallel zueinander auf Block liegend verbunden werden, beispielsweise können diese miteinander verbolzt werden. Ein Verteilerblock kann beispielsweise eine oder vorzugsweise zwei Reihen von Heißkanaldüsen aufweisen, und werden beispielsweise sechs Verteilerblöcke aneinander aufgereiht und besitzt jeder Verteilerblock zwei Zeilen je acht Heißkanaldüsen, ergibt sich ein Feld von 96 Heißkanaldüsen, wenn sechs Verteilerblöcke zu einer Verteilereinheit zusammengesetzt sind.

Mit besonderem Vorteil ist wenigstens ein Heizelement so am Verteilerblock angebracht, dass dieses einen möglichst großen Abstand zum Kühlkanal aufweist. Verläuft der Kühlkanal beispielsweise mittig durch den Ventilblock, so können das oder die Heizelemente in seitlich eingebrachten Nuten außenseitig am Verteilerblock angebracht sein.

Der in dem Verteilerblock eingebrachte Kühlkanal soll die Kühlwirkung insbesondere auf das Mittel übertragen, mit dem die Kühlwirkung wiederum auf das Werkzeugelement des formgebenden Spritzgusswerkzeuges übertragbar ist. Hingegen sollte der restliche Verteilerblock insbesondere in den Bereichen, in denen die Heißkanaldüsen eingebracht sind, eine entsprechend hohe Temperatur aufweisen. Daher ist es vorteilhaft denkbar, dass der im Verteilerblock eingebrachte Kühlkanal wenigstens lokal begrenzt mit einem Spalt zum Verteilerblock umschlossen ist, der insbesondere zwischen dem Kühlkanal und der Heißkanaldüse eingebracht ist.

Durch den Spalt kann eine Wärmebarriere geschaffen werden, sodass der Kühlkanal, der beispielsweise mit einem Kühlmittel durchströmt wird, eine entsprechende Auskühlung der Mittel ermöglicht, um folglich auch das Werkzeugelement des Spritzgusswerkzeuges zu kühlen, die Kühlwirkung jedoch nicht auf den übrigen Verteilerblock zur Aufnahme der Heißkanaldüsen übertragen wird. Der Spalt bildet insbesondere einen Luftspalt und schafft eine Isolierung zwischen dem kalten Kühlkanal und den kalten Mitteln zur Kühlung gegenüber dem ansonsten mit einer hohen Temperatur arbeitenden Verteilerblock.

Gemäß einer möglichen, insbesondere bevorzugten Ausführungsvariante sind im Verteilerblock mit Mittel bildende Kühlstempel eingebracht, die in den Verteilerblock hinein bis an den Kühlkanal ragen und sich bis an eine Kopfseite des Verteilerblocks erstrecken, um einen Kontakt zum Werkzeugelement des formgebenden Spritzgusswerkzeugs zu bilden, wenn der Verteilerblock an diesem angebracht wird. Die Kühlstempel sind in den Bereichen in Kontakt mit dem Kühlkanal gebracht, in dem der Spalt zum Verteilerblock ausgebildet ist.

Der Kühlstempel kann insbesondere aus einem Werkstoff ausgebildet sein, der sich vom Werkstoff des Verteilerblockes unterscheidet, insbesondere kann der Kühlstempel aus einem Kupferwerkstoff ausgebildet sein. Andere Werkstoffe sind ebenfalls denkbar, die einen ähnlich hohen Wärmeleitkoeffizienten aufweisen, der insbesondere höher ist als der Wärmeleitkoeffizient des Werkstoffes des Verteilerblockes, der beispielsweise einen Werkzeugstahl aufweist.

Der Verteilerblock kann in einer Seitenfläche eingebrachte Nuten aufweisen, in denen jeweils ein Heizelement eingebracht ist, und/oder wobei mehrere Verteilerblöcke über ihre Seitenflächen aneinander angrenzend angeordnet sind und die Heizwirkung auch in den benachbarten Verteilerblock übergeht. Sind die Heißkanaldüsen in zwei Reihen randseitig am Verteilerblock eingebracht, so kann eine besonders gute Heizwirkung die Heißkanaldüsen aufheißen, während zwischen den beiden Reihen der Heißkanaldüsen die Kühlstempel eingebracht sind und eine niedrige Temperatur aufweisen.

Insbesondere weist der Verteilerblock innenliegende Schmelzkanäle auf, die sich von einem zentralen Zulauf an die Heißkanaldüsen erstrecken. Die Herstellung eines solchen Verteilerblockes erfolgt insbesondere mittels eines generativen Fertigungsverfahrens, insbesondere mittels des Laser-Selective-Melting Verfahrens, und der Verteilerblock besteht insbesondere aus einem metallischen Werkstoff, insbesondere einem Werkzeugstahl.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Draufsicht auf eine Verteilereinheit mit sechs Verteilerblöcken,
- Figur 2: eine perspektivische Ansicht der Verteilereinheit gemäß Figur 1,
- Figur 3: eine Draufsicht auf einen einzelnen Verteilerblock,
- Figur 4: eine Ansicht des Querschnittes gemäß der Querschnittslinie A-A in Figur 3,
- Figur 5: eine Ansicht des Querschnittes gemäß der Querschnittslinie B-B in Figur 3,
- Figur 6: eine Seitenansicht des Verteilerblockes im teilweisen Schnitt gemäß der Schnittlinie C-C in Figur 3,
- Figur 7: eine weitere Detailansicht des Verteilerblockes im Querschnitt,
- Figuren 8-10: jeweils eine Ansicht der Schmelzkanäle mit einem gemeinsamen Zulauf innerhalb des Verteilerblockes (schematisiert).

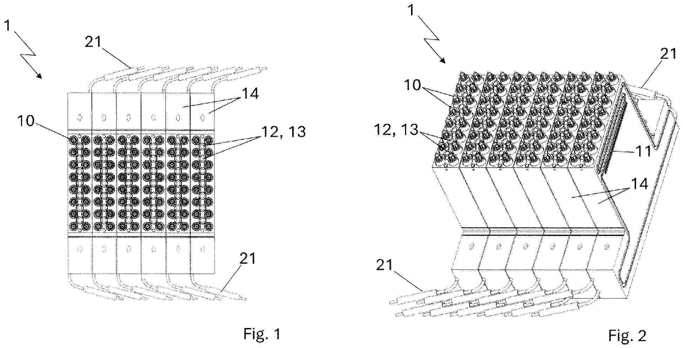

Die Figuren 1 und 2 zeigen eine Verteilereinheit 1 bestehend aus beispielhaft sechs Verteilerblöcken 14, wobei Figur 1 die Ansicht auf die Kopfseite und Figur 2 eine perspektivische Ansicht zeigt. Ein Werkzeugelement des Spritzgusswerkzeuges, das nicht näher dargestellt ist, kann an diese Kopfseite der Verteilereinheit 1 zur Anlage gebracht werden. Die Verteilereinheit 1 ist aus sechs Verteilerblöcken 14 aufgebaut, die mit ihren Seitenflächen plan aneinander liegend angeordnet sind. Jeder Verteilerblock 14 umfasst 16 Heißkanaldüsen 10, die in zwei Reihen auf diesem aufgebracht sind, die sich in einer ersten Richtung erstrecken, wobei die zueinander ausgerichtete Anordnung der insgesamt sechs Verteilerblöcke 14 in einer Richtung quer zur Erstreckungsrichtung der Heißkanaldüsen 10 angebracht sind, sodass insgesamt ein rechteckiges Feld von insgesamt 96 Heißkanaldüsen 10 entsteht. Mit einer solchen Verteilereinheit 1 können 96 Angüsse beispielsweise zur Herstellung einer PCR-Testplatte erzeugt werden.

Die Ansicht zeigt ferner Mittel 13, mit denen zumindest ein Werkzeugelement eines formgebenden Spritzgusswerkzeuges gekühlt werden kann, wenn diese Mittel 13 in Kontakt mit dem Werkzeugelement gebracht werden. Die Mittel 13 sind Teil einer Kühleinrichtung 12, die im weiteren Verlauf näher beschrieben wird.

Die Verteilereinheit 1 ist beheizt, wofür die Verteilereinheit 1 elektrische Anschlüsse 21 aufweist, um mit je einem Anschluss 21 je ein Heißelement 11 zu beheizen, das an der Seitenwange des rechts abgebildeten Verteilerblockes 14 in Figur 2 beispielhaft zu sehen ist. Diese Heizelemente 11 sind an jeder Seitenfläche der Verteilerblöcke 14 eingerichtet, wenigstens an jeder zweiten Seitenfläche, sodass über den Betrieb der Heizelemente 11 die Heißkanaldüsen 10 hinreichend beheizt sind, um einen problemlosen Fluss der plastifizierten Schmelze durch die Heißkanaldüsen 10 zu gewährleisten.

Zwischen den Heißkanaldüsen 10 ist ein Teil der Kühleinrichtung 12 dargestellt, nämlich in Form der Mittel 13, um in Kontakt mit der Kopfseite ein entsprechendes Werkzeugelement des Spritzgusswerkzeuges zu kühlen.

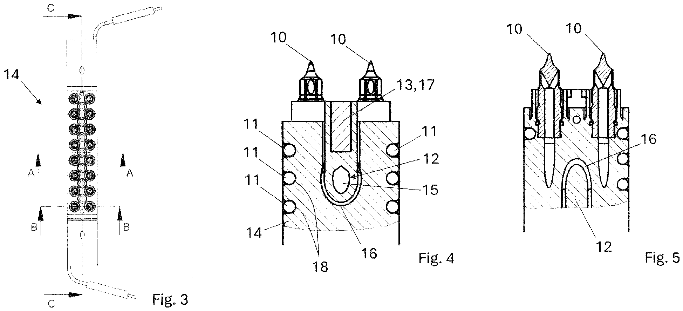

Figur 3 zeigt einen Verteilerblock 14 von der Kopfseite, wobei an diesem Verteilerblock 14 mehrere Schnitte A-A, B-B und C-C gezeigt sind, die in den noch folgenden Figuren 4, 5 und 6 wiedergegeben sind.

Figur 4 stellt eine Querschnittsansicht durch den Verteilerblock 14 gemäß der Schnittlinie A-A dar. Die Schnittebene verläuft in einer Position durch den Verteilerblock 14, sodass das Mittel 13 geschnitten ist, wobei das Mittel 13 gemäß der Darstellung wenigstens einen Kühlstempel 17 umfasst. Weiterhin ist ein Kühlkanal 15 gezeigt, der über einen Spalt 16 zum übrigen Verteilerblock 14 isoliert ist. Werden die seitlich am Verteilerblock 14 angeordneten Heizelemente 11 betrieben, die in entsprechende Nuten 18 im Verteilerblock 14 eingebracht sind, so kann der übrige Verteilerblock 14 eine Temperatur aufweisen, die hinreichend ist, um die Heißkanaldüsen 10 entsprechend dem notwendigen Schmelzfluss zu temperieren, jedoch kann durch den Durchfluss eines Kältemittels durch den Kühlkanal 15 die Kühleinrichtung 12 so betrieben werden, dass das Mittel 13 in Form des Kühlstempels 17 eine deutlich niedrigere Temperatur aufweist, sodass im Kontakt mit einem Werkzeugelement über die entsprechende Kopfseite (Oberseite) das Werkzeugelement gekühlt wird, obwohl auch die Heißkanaldüsen 10 einen Kontakt mit dem Werkzeugelement bilden.

Figur 5 zeigt eine Querschnittsansicht durch den Verteilerblock 14 gemäß der Querschnittslinie B-B, wobei nunmehr die beiden Heißkanaldüsen 10 in der Querschnittsebene liegen. Dabei wird deutlich, dass hier die Kühleinrichtung nicht vorhanden ist, sodass lediglich noch der nicht gezeigte Kühlkanal hindurchläuft, wobei weiterhin der Spalt 16 vorhanden ist, um eine Auskühlung des Bereiches des Verteilerblockes 14 durch die Kühleinrichtung 12 zu vermeiden, und um die Heißkanaldüsen 10 auf der entsprechenden Temperatur zu halten.

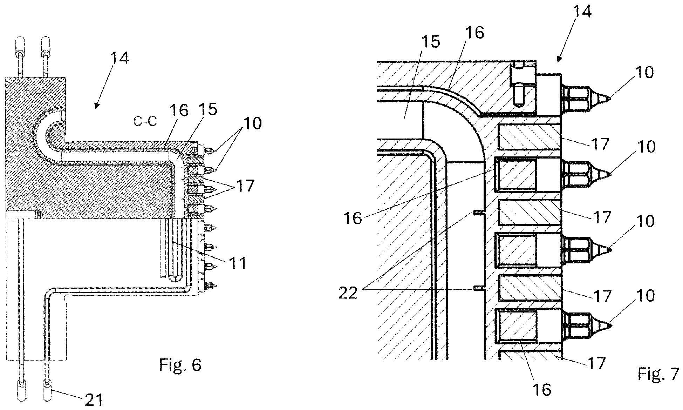

Schließlich zeigt Figur 6 eine halb geschnittene seitliche Ansicht des Verteilerblockes 14, sodass der Verlauf des Kühlkanals 15 im oberen Teil geschnitten dargestellt ist. Dabei wird deutlich, dass die Kühlstempel 17 in unmittelbarem Festkörperkontakt mit dem Kühlkanal 15 stehen, während die Heißkanaldüsen 10 durch den Spalt 16 in einem Bereich des Verteilerblockes 14 aufgenommen sind, der vom Kühlkanal 15 getrennt ist. Im nicht geschnittenen, unteren Teil des Verteilerblocks 14 ist auf der Seitenfläche die Anordnung des Heizelementes 11 sichtbar, das mit dem elektrischen Anschluss 21 entsprechend verbunden ist.

Figur 7 zeigt eine Detailansicht des seitlichen Schnittes durch den Verteilerblock 14, sodass der Kühlkanal 15 und der lokal mehrfach vorhandene Spalt 16 in Form eines Luftspaltes zu sehen ist. Auch hier wird noch einmal die Anordnung der Heißkanaldüsen 10 in einem jeweiligen Bereich des Verteilerblockes 14 deutlich, der über den Spalt 16 vom Kühlkanal 15 getrennt ist. Hingegen weisen die Kühlstempel 17 einen direkten Festkörperübergang zum Kühlkanal 15 auf. Im Kühlkanal 15 sind beispielhaft Vorsprünge 22 gezeigt, die eine Verwirbelung des Kältefluides erzeugen, um einen noch besseren Wärmeeintrag in den Kühlstempel 17 zu erreichen.

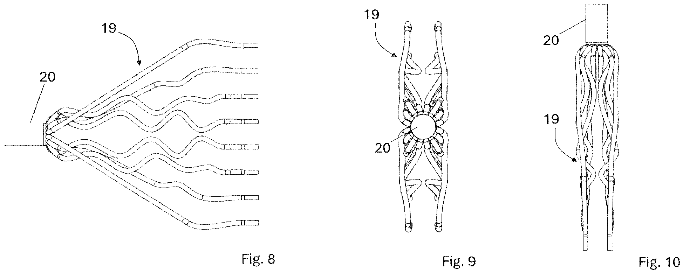

Die Figuren 8, 9 und 10 zeigen in einer schematisierten Darstellung die Schmelzkanäle 19 zu den acht bzw. 16 Heißkanaldüsen, wobei die Schmelzkanäle 19 einen gemeinsamen Zulauf 20 aufweisen. Die Darstellung zeigt gegenständlich die Hohlstruktur innerhalb des Verteilerblockes 14 (also in einer invertierten Darstellung), wobei die Kühlkanäle so gestaltet sind, dass diese alle die gleiche Länge aufweisen, sodass die plastifizierte Schmelze beginnend vom Zulauf 20 bis zur Heißkanaldüse jeweils den gleichen Weg zurücklegt. Eine solche innenliegende Kanalstruktur ist vor allem dann herstellbar, wenn der gesamte Verteilerblock 14 mittels eines generativen Fertigungsverfahrens hergestellt ist, insbesondere mittels des Laser Selective Melting Verfahrens, und aus einem metallischen Werkstoff bestehen kann.

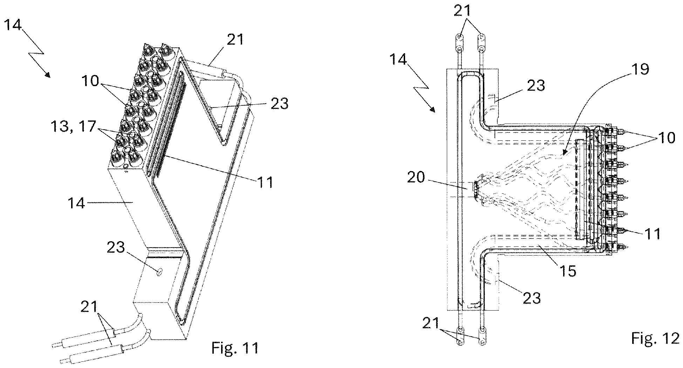

Die Figuren 11 und 12 zeigen weitere Ansichten des Verteilerblockes 14 mit den die Mittel 13 bildendenden Kühlstempeln 17 und den Heißkanaldüsen 10 sowie den elektrischen Anschlüssen 21, wobei ferner ein Flüssigkeitszulauf und -ablauf 23 gezeigt ist, über die die Kühlflüssigkeit in den Kühlkanal 10 ein- und ausgebracht werden kann, beispielsweise entsprechend temperiertes Wasser. Dargestellt ist ferner der Zulauf 20 mit den Schmelzkanälen 19, die sich vom Zulauf 20 bis an die Heißkanaldüsen 10 erstrecken, siehe insbesondere Figur 12. Die elektrischen Anschlüsse 21 können dabei beidseitig des Verteilerblockes 14 vorhanden sein, insbesondere wenn auf jeder Seitenfläche des Verteilerblockes 14 wenigstens ein Heizelement 11 angeordnet ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Verteilereinheit

- 10: Heißkanaldüse
- 11: Heizelement
- 12: Kühleinrichtung
- 13: Mittel
- 14: Verteilerblock
- 15: Kühlkanal
- 16: Spalt
- 17: Kühlstempel
- 18: Nut
- 19: Schmelzkanal
- 20: Zulauf
- 21: elektrischer Anschluss
- 22: Vorsprung
- 23: Flüssigkeitszulauf und -ablauf

## Patentansprüche

1. Verteilereinheit (1) für ein Spritzgusswerkzeug, aufweisend eine Vielzahl von Heißkanaldüsen (10), wobei wenigstens ein Heizelement (11) eingerichtet ist, das zur Beheizung der Verteilereinheit (1) dient, sodass die Fließfähigkeit einer Kunststoffschmelze aufrecht haltbar und an die Heißkanaldüsen (10) führbar ist,
**dadurch gekennzeichnet,**
**dass** zwischen den Heißkanaldüsen (10) eine Kühleinrichtung (12) angeordnet ist und wobei die Kühleinrichtung (12) Mittel (13) aufweist, mit denen zumindest ein Werkzeugelement des formgebenden Spritzgusswerkzeugs kühlbar ist.

2. Verteilereinheit (1) nach Anspruch 1,
**dadurch gekennzeichnet,**
**dass** die Heißkanaldüsen (10) in Reihen und Spalten angeordnet sind und/oder dass die Anordnung der Heißkanaldüsen (10) ein Array bildet.

3. Verteilereinheit (1) nach Anspruch 1 oder 2,
**dadurch gekennzeichnet,**
**dass** ein Grundkörper der Verteilereinheit (1) mittels wenigstens eines Verteilerblockes (14) gebildet ist, an dem die Heißkanaldüsen (10) aufgenommen sind, wobei die Kühleinrichtung (12) wenigstens einen Kühlkanal (15) aufweist, der im Verteilerblock (14) eingebracht ist.

4. Verteilereinheit (1) nach Anspruch 3,
**dadurch gekennzeichnet,**
**dass** an dem Ventilblock (14) beabstandet zum Kühlkanal (15) das zumindest eine Heizelement (11) angeordnet ist.

5. Verteilereinheit (1) nach Anspruch 3 oder 4,
**dadurch gekennzeichnet,**
**dass** der Grundkörper der Verteilereinheit (1) aus mehreren Verteilerblöcken (14) gebildet ist, die parallel zueinander auf Block liegend angeordnet sind.

6. Verteilereinheit (1) nach einem der Ansprüche 3 bis 5,
**dadurch gekennzeichnet,**
**dass** der im Verteilerblock (14) eingebrachte Kühlkanal (15) lokal begrenzt mit einem Spalt (16) zum Verteilerblock (14) umschlossen ist, der insbesondere zwischen dem Kühlkanal (15) und der Heißkanaldüse (10) eingebacht ist.

7. Verteilereinheit (1) nach einem der Ansprüche 3 bis 6,
**dadurch gekennzeichnet,**
**dass** im Verteilerblock (14) die Mittel (13) bildende Kühlstempel (17) eingebracht sind, die in den Verteilerblock (14) hinein bis an den Kühlkanal (15) ragen und sich bis an eine Kopfseite des Verteilerblocks (14) erstrecken, um einen Kontakt zum Werkzeugelement des formgebenden Spritzgusswerkzeugs zu bilden.

8. Verteilereinheit (1) nach Anspruch 7,
**dadurch gekennzeichnet,**
**dass** der Kühlstempel (17) aus einem Werkstoff ausgebildet ist, der sich vom Werkstoff des Verteilerblockes (14) unterscheidet, insbesondere wobei der Kühlstempel (17) aus einem Kupferwerksoff ausgebildet ist.

9. Verteilereinheit (1) nach Anspruch 7 oder 8,
**dadurch gekennzeichnet,**
**dass** über der Kopfseite des Verteilerblocks (14) verteilt die Heißkanaldüsen (10) zumindest abschnittsweise abwechselnd mit den Kühlstempeln (17) angeordnet sind.

10. Verteilereinheit (1) nach einem der vorgenannten Ansprüche,
**dadurch gekennzeichnet,**
**dass** der Verteilerblock (14) in einer Seitenfläche eingebrachte Nuten (18) aufweist, in denen jeweils ein Heizelement (11) eingebracht ist, und/oder wobei mehrere Verteilerblöcke (14) über ihre Seitenflächen aneinander angrenzend angeordnet sind.

11. Verteilereinheit (1) nach einem der vorgenannten Ansprüche,
**dadurch gekennzeichnet,**
**dass** der Verteilerblock (14) innenliegende Schmelzkanäle (19) aufweist, die sich von einem zentralen Zulauf (20) an die Heißkanaldüsen (10) erstrecken.

12. Verteilereinheit (1) nach einem der vorgenannten Ansprüche,
**dadurch gekennzeichnet,**
**dass** der Verteilerblock (14) mittels eines generativen Fertigungsverfahrens hergestellt ist, insbesondere mittels des Laser Selective Melting Verfahrens, und aus einem metallischen Werkstoff besteht.

## Geänderte Patentansprüche

### Geänderte Patentansprüche gemäss Regel 137(2) EPÜ.

1. Verteilereinheit (1) für ein Spritzgusswerkzeug, aufweisend eine Vielzahl von Heißkanaldüsen (10), wobei wenigstens ein Heizelement (11) eingerichtet ist, das zur Beheizung der Verteilereinheit (1) dient, sodass die Fließfähigkeit einer Kunststoffschmelze aufrecht haltbar und an die Heißkanaldüsen (10) führbar ist, wobei ein Grundkörper der Verteilereinheit (1) mittels wenigstens eines Verteilerblockes (14) gebildet ist, an dem die Heißkanaldüsen (10) aufgenommen sind, wobei die Kühleinrichtung (12) wenigstens einen Kühlkanal (15) aufweist, der im Verteilerblock (14) eingebracht ist und wobei zwischen den Heißkanaldüsen (10) eine Kühleinrichtung (12) angeordnet ist,
**dadurch gekennzeichnet,**
**dass** die Kühleinrichtung (12) Mittel (13) aufweist, mit denen zumindest ein Werkzeugelement des formgebenden Spritzgusswerkzeugs kühlbar ist, indem im Verteilerblock (14) die Mittel (13) bildende Kühlstempel (17) eingebracht sind, die in den Verteilerblock (14) hinein bis an den Kühlkanal (15) ragen und sich bis an eine Kopfseite des Verteilerblocks (14) erstrecken, um einen Kontakt zum Werkzeugelement des formgebenden Spritzgusswerkzeugs zu bilden.

2. Verteilereinheit (1) nach Anspruch 1,
**dadurch gekennzeichnet,**
**dass** die Heißkanaldüsen (10) in Reihen und Spalten angeordnet sind und/oder dass die Anordnung der Heißkanaldüsen (10) ein Array bildet.

3. Verteilereinheit (1) nach Anspruch 1,
**dadurch gekennzeichnet,**
**dass** an dem Ventilblock (14) beabstandet zum Kühlkanal (15) das zumindest eine Heizelement (11) angeordnet ist.

4. Verteilereinheit (1) nach Anspruch 1 oder 2,
**dadurch gekennzeichnet,**
**dass** der Grundkörper der Verteilereinheit (1) aus mehreren Verteilerblöcken (14) gebildet ist, die parallel zueinander auf Block liegend angeordnet sind.

5. Verteilereinheit (1) nach einem der vorgenannten Ansprüche,
**dadurch gekennzeichnet,**
**dass** der im Verteilerblock (14) eingebrachte Kühlkanal (15) lokal begrenzt mit einem Spalt (16) zum Verteilerblock (14) umschlossen ist, der insbesondere zwischen dem Kühlkanal (15) und der Heißkanaldüse (10) eingebacht ist.

6. Verteilereinheit (1) nach Anspruch 5,
**dadurch gekennzeichnet,**
**dass** der Kühlstempel (17) aus einem Werkstoff ausgebildet ist, der sich vom Werkstoff des Verteilerblockes (14) unterscheidet, insbesondere wobei der Kühlstempel (17) aus einem Kupferwerksoff ausgebildet ist.

7. Verteilereinheit (1) nach Anspruch 5 oder 6,
**dadurch gekennzeichnet,**
**dass** über der Kopfseite des Verteilerblocks (14) verteilt die Heißkanaldüsen (10) zumindest abschnittsweise abwechselnd mit den Kühlstempeln (17) angeordnet sind.

8. Verteilereinheit (1) nach einem der vorgenannten Ansprüche,
**dadurch gekennzeichnet,**
**dass** der Verteilerblock (14) in einer Seitenfläche eingebrachte Nuten (18) aufweist, in denen jeweils ein Heizelement (11) eingebracht ist, und/oder wobei mehrere Verteilerblöcke (14) über ihre Seitenflächen aneinander angrenzend angeordnet sind.

9. Verteilereinheit (1) nach einem der vorgenannten Ansprüche,
**dadurch gekennzeichnet,**
**dass** der Verteilerblock (14) innenliegende Schmelzkanäle (19) aufweist, die sich von einem zentralen Zulauf (20) an die Heißkanaldüsen (10) erstrecken.

10. Verteilereinheit (1) nach einem der vorgenannten Ansprüche,
**dadurch gekennzeichnet,**
**dass** der Verteilerblock (14) mittels eines generativen Fertigungsverfahrens hergestellt ist, insbesondere mittels des Laser Selective Melting Verfahrens, und aus einem metallischen Werkstoff besteht.
